(19) Europäisches Patentamt

European Patent Office

Office européen des brevets

(11) EP 0 595 087 B1

(12) **EUROPÄISCHE PATENTSCHRIFT**

(45) Veröffentlichungstag und Bekanntmachung des Hinweises auf die Patenterteilung:
**13.01.1999  Patentblatt 1999/02**

(51) Int Cl.$^6$: **H04B 10/18**

(21) Anmeldenummer: 93116200.2

(22) Anmeldetag: 07.10.1993

(54) **Empfangsseitige Schaltung für ein System zur optischen Übertragung eines Digitalsignals über einen dispersionsbehafteten Lichtwellenleiter**

Circuit for the reception of digital signals which have been transmitted over a dispersive optical waveguide

Récepteur pour un système de transmission d'un signal numérique sur un guide d'ondes optique dispersif

(84) Benannte Vertragsstaaten:
**AT BE CH DE DK ES FR GB IT LI NL SE**

(30) Priorität: **29.10.1992  DE 4236488**

(43) Veröffentlichungstag der Anmeldung:
**04.05.1994  Patentblatt 1994/18**

(73) Patentinhaber: **ALCATEL ALSTHOM COMPAGNIE GENERALE D'ELECTRICITE**
**75008 Paris (FR)**

(72) Erfinder: **Wedding, Berthold, Dr.**
**D-70825 Korntal-Münchingen (DE)**

(74) Vertreter: **Kugler, Hermann, Dipl.-Phys. et al**
**Alcatel Alsthom**
**Intellectual Property Department,**
**Postfach 30 09 29**
**70449 Stuttgart (DE)**

(56) Entgegenhaltungen:
- **ELECTRONICS LETTERS. Bd. 28, Nr. 14 , 2. Juli 1992 , STEVENAGE GB Seiten 1298 - 1300 WEDDING 'New method for optical transmission beyond dispersion limit'**

## Beschreibung

Die Erfindung betrifft eine empfangsseitige Schaltung nach dem Oberbegriff des Patentanspruchs 1 und ein System nach dem Oberbegriff des Patentanspruchs 3.

Ein System und eine empfangsseitige Schaltung mit den dort genannten Merkmalen sind bekannt aus: B. Wedding: "New Method for Optical Transmission Beyond Dispersion Limit", Electronics Letters, 2nd July 1992, Vol. 28, No. 14, Seite 1298 bis 1300. Darin wird ein System zur optischen Übertragung eines Digitalsignals über einen dispersionsbehafteten Lichtwellenleiter beschrieben. Das Digitalsignal moduliert einen optischen Sender in seiner Frequenz, was zur Folge hat, daß nacheinander Wellenzüge mit verschiedenen Wellenlängen $\lambda_0$ und $\lambda_1$ in den Lichtwellenleiter eingestrahlt werden. Die chromatische Dispersion des Lichtwellenleiters bewirkt, daß Licht mit der größeren Wellenlänge $\lambda_0$ eine größere Laufzeit für die Lichtwellenleiterstrecke benötigt als Licht mit der kleineren Wellenlänge $\lambda_1$. Es gibt daher eine Zeitspanne $\Delta\tau$, während der sich z.B. der letzte Teil des ersten Wellenzugs mit der Wellenlänge $\lambda_0$ mit dem ersten Teil des Wellenzugs mit der Wellenlänge $\lambda_1$ überlappt. Diese Zeitspanne $\Delta\tau$ wird als Laufzeitunterschied bezeichnet und errechnet sich nach:

$$\Delta\tau = \Delta\lambda \bullet D \bullet L,$$

wobei

$\Delta\lambda$    der Unterschied zwischen $\lambda_0$ und $\lambda_1$,
D    die chromatische Dispersion des Lichtwellenleiters und
L    die Länge der Lichtwellenleiterstrecke 3 ist.

Aufgrund der genannten Überlappungen wird am Ende der Lichtwellenleiterstrecke ein intensitätsmoduliertes Signal empfangen. Um aus diesem Signal das Digitalsignal zurückzugewinnen, ist ein Integrator oder Tiefpaß-Filter in Verbindung mit einer Entscheiderschaltung vorgesehen. Die Entscheiderschaltung ist jedoch nicht näher erläutert.

Es ist daher die Aufgabe der Erfindung, eine empfangsseitige Schaltung anzugeben, mit der das Digitalsignal wiedergewonnen werden kann. Die Aufgabe wird wie in Patentanspruch 1 angegeben gelöst. Ein Aspekt der Erfindung ist, daß aufgrund der empfangsseitigen Schaltung ein neues optisches Übertragungssystem geschaffen wird. Ein solches System ist Gegenstand des Patentanspruchs 3. Weiterbildungen ergeben sich aus den abhängigen Ansprüchen.

Ein Vorteil der Erfindung ist, daß die empfangsseitige Schaltung das Digitalsignal auch dann noch zurückgewinnt, wenn der Laufzeitunterschied $\Delta\tau$ ein Vielfaches der Dauer eines Bits ist.

Die Erfindung wird nun anhand der Zeichnungen näher erläutert. Es zeigen:

Fig. 1      eine Blockdiagramm-Darstellung des Systems, in dem die Erfindung verwendet ist,

Fig. 2      ein Blockdiagramm eines ersten Ausführungsbeispiels der erfindungsgemäßen empfangsseitigen Schaltung,

Fig. 3      ein Blockdiagramm eines zweiten Ausführungsbeispiels der erfindungsgemäßen empfangsseitigen Schaltung,

Fig. 4      ein detaillierteres Schaltbild der empfangsseitigen Schaltung von Fig. 3,

Fig. 5      ein Beispiel eines empfangenen elektrischen Ausgangssignals bei einem angenommenen Digitalsignal und einem Laufzeitunterschied $\Delta\tau$, der der Dauer von drei Bits entspricht,

Fig. 6      eine Zustandstabelle der Schaltung aus Fig. 4 für das Beispiel aus Fig. 5.

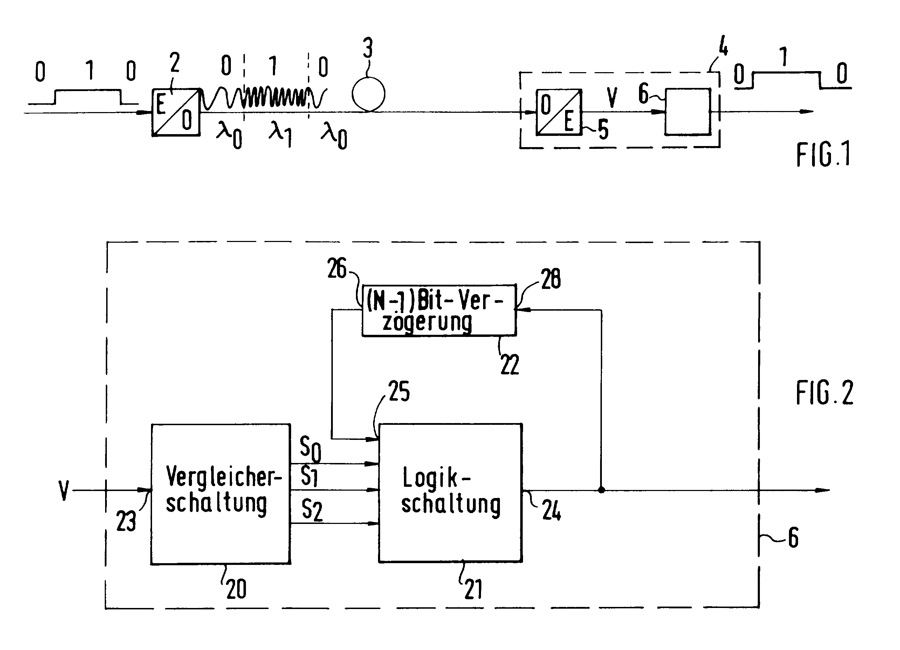

Das in Fig. 1 gezeigte Übertragungssystem für Digitalsignale enthält auf der Sendeseite (linker Teil der Fig.) einen Elektrisch-Optisch Wandler 2, dessen wesentliches Element ein Halbleiterlaser ist, der die Eigenschaft hat, ein elektrisches Eingangssignal in Form eines binären Digitalsignals durch Frequenzmodulation, hier durch Frequenzumtastung (englisch: FSK = Frequency Shift Keying), in ein entsprechend moduliertes optisches Ausgangssignal umzusetzen. Das optische Ausgangssignal hat also verschiedene Frequenzen für die verschiedenen Binärzustände des zu übertragenden Digitalsignals. In der Fig. 1 entspricht dem Binärzustand "0" eine Wellenlänge $\lambda_0$ und dem Binärzustand "1" eine Hellenlänge $\lambda_1$. Die Intensität bleibt bei dieser Modulation normalerweise konstant, wie es dort mit Wellenzügen mit unterschiedlichen Frequenzen, jedoch gleichen Amplituden angedeutet ist.

Diese sendeseitige Einrichtung ist über einen Lichtwellenleiter 3, der die Übertragungsstrecke bildet, mit einem optischen Empfänger 4 des Systems verbunden.

Dieser enthält einen Optisch-Elektrisch Wandler 5, der einen optischen Detektor, einen Vorverstärker und einen Verstärker enthält und den zeitlichen Verlauf der Intensität seines optischen Eingangssignals in einen zeitlichen Verlauf der Amplitude seines elektrischen Ausgangssignals V umsetzt. Des weiteren enthält der optische Empfänger 4 eine erfindungsgemäße empfangsseitige Schaltung 6, die aus dem elektrischen Ausgangssignal V des Optisch-Elektrisch Wandlers 5 das übertragene Digitalsignal zurückgewinnt. Letzteres ist am Ausgang schematisch angedeutet.

Das elektrische Ausgangssignal V des Optisch-Elektrisch Wandlers durchläuft drei Wertebereiche: Einen ersten Wertebereich oberhalb eines oberen Schwellenwertes $V_1$, einen zweiten Wertebereich unterhalb eines unteren Schwellenwertes $V_0$ und einen dritten Wertebereich zwischen dem oberen und dem unteren Schwellenwert.

Liegt das elektrische Ausgangssignal im ersten Wertebereich, so bedeutet dies, daß sich zwei Wellenzüge des optischen Signals konstruktiv überlagert haben und im Empfänger deshalb eine höhere Lichtleistung ankommt.

Liegt es in dem zweiten Wertebereich, so bedeutet dies, daß praktisch keine Lichtleistung empfangen wird, weil infolge der Laufzeitunterschiede der eine Wellenzug geendet hat, bevor der andere beginnt.

Liegt es in dem dritten Wertebereich, so bedeutet dies, daß "die normale" Lichtleistung empfangen wird, die nicht durch Laufzeitunterschiede verschiedener Wellenzüge beeinflußt ist.

Der Verlauf dieses elektrischen Ausgangssignals V entspricht dem des optischen Signals nach Durchlaufen der Lichtwellenleiterstrecke.

Mit dem in Fig. 2 als Blockdiagramm gezeigten ersten Ausführungsbeispiel der empfangsseitigen Schaltung werden die drei Wertebereiche ausgewertet. Sie besteht aus einer Vergleicherschaltung 20, einer Logikschaltung 21 und einer (N-1) Bit-Verzögerungsschaltung 22, beispielsweise einem (N-1) Bit-Schieberegister. Die Vergleicherschaltung ist mit dem Optisch-Elektrisch Wandler 5 (Fig. 1) über einen Eingang 23 verbunden und hat drei Signalausgänge $S_0$, $S_1$, $S_2$ für ebenso bezeichnete Signale. Die Logikschaltung 21 hat einen Eingang 25, drei Eingänge für die Signale $S_0$, $S_1$ und $S_2$ und einen Ausgang 24. Sie ist ausgangsseitig mit der (N-1) Bit-Verzögerungsschaltung 22 verbunden. Die (N-1) Bit-Verzögerungsschaltung hat einen Eingang 28 und einen Ausgang 26. Der Ausgang 26 ist mit dem Eingang 25 der Logikschaltung verbunden. In diesem Ausführungsbeispiel liegt die (N-1) Bit-Verzögerungsschaltung 22 in einer vom Ausgang 24 der Logikschaltung zu ihrem Eingang 25 führenden Rückkopplungsschleife.

Vergleicherschaltung, Logikschaltung und (N-1) Bit-Verzögerungsschaltung sind durch einen Takt synchronisiert. Das bedeutet, daß das elektrische Ausgangssignal V des Optisch-Elektrisch-Wandlers 5 in Fig. 1 zu durch den Takt bestimmten aufeinanderfolgenden Zeitpunkten ausgewertet wird. Jeder zu einem solchen Zeitpunkt festgestellte Signalwert wird im folgenden als Abtastwert des elektrischen Ausgangssignals V, kurz: Abtastwert, bezeichnet.

Die Vergleicherschaltung wertet das vom Optisch-Elektrisch Wandler 5 kommende elektrische Ausgangssignal V derart aus, daß sie ein erstes Binärsignal $S_1$ abgibt, wenn der Abtastwert im ersten Wertebereich liegt, daß sie ein zweites Binärsignal $S_0$ abgibt, wenn der Abtastwert im zweiten Wertebereich liegt und daß sie ein drittes Binärsignal $S_2$ abgibt, wenn der Abtastwert im dritten Wertebereich liegt.

Die Binärsignale $S_0$, $S_1$ und $S_2$ können jeweils zwei Zustände einnehmen; gesetzt entspricht dem logischen Wert "1" und nicht gesetzt dem inversen Wert.

Für die Funktion der Schaltung 6 ist es notwendig, daß die Logikschaltung 21 und die Verzögerungsschaltung 22 zusammen eine Verzögerung bewirken, die der Dauer von N Bits entspricht. Die Aufteilung der Verzögerung auf die beiden Schaltungen 21 und 22 ist dabei ohne Belang.

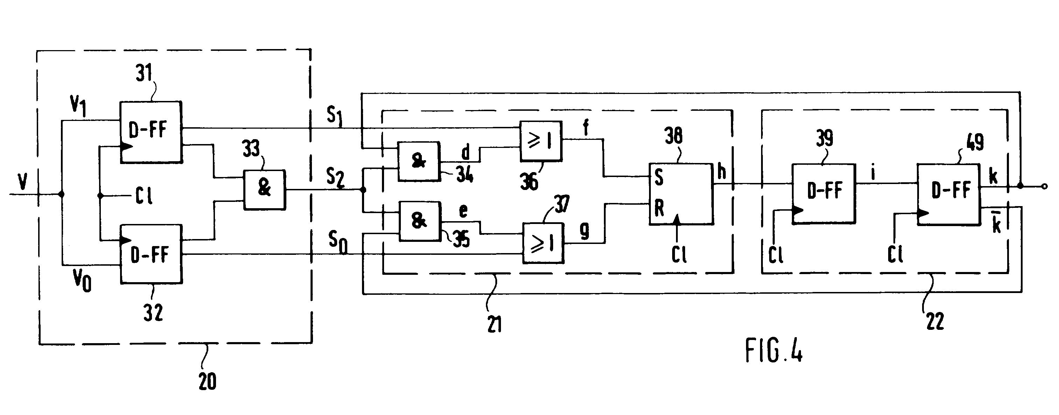

Vorzugsweise bewirkt die Logikschaltung 21 aufgrund eines an ihrem Ausgang vorhandenen getakteten RS-Flipflops eine Verzögerung, die der Dauer eines Bits entspricht. Die Verzögerungsschaltung 22 ist in diesem Falle eine (N-1) Bit-Verzögerungsschaltung. Ein detaillierteres Ausführungsbeispiel einer solchen Logikschaltung 21 wird anhand der Fig. 4 erläutert.

Die Zahl N ist der aufgerundete ganzzahlige Wert von

$$\frac{\Delta\lambda \bullet D \bullet L}{T},$$

T ist die Dauer eines Bits, D, L und $\Delta\lambda$ wurden bereits eingeführt. Das bedeutet, daß N gleich dem aufgerundeten ganzzahligen Wert des Laufzeitunterschiedes $\Delta\tau$ ist.

Logikschaltung 21 und (N-1) Bit-Verzögerungsschaltung 22 haben folgende Funktion: Ist das Binärsignal $S_1$ gesetzt, nimmt der Ausgang 24 der Logikschaltung einen ersten logischen Wert, hier den logischen Wert "1", ein. Ist das Binärsignal $S_0$ gesetzt, nimmt der Ausgang 24 einen zweiten logischen Wert ein; dieser entspricht dem invertierten Wert des ersten logischen Wertes "1". Ist das Binärsignal $S_2$ gesetzt, nimmt der Ausgang 24 den Wert ein, der dem Wert des Ausgangs 26 der (N-1) Bit-Verzögerungsschaltung zu diesem Zeitpunkt entspricht.

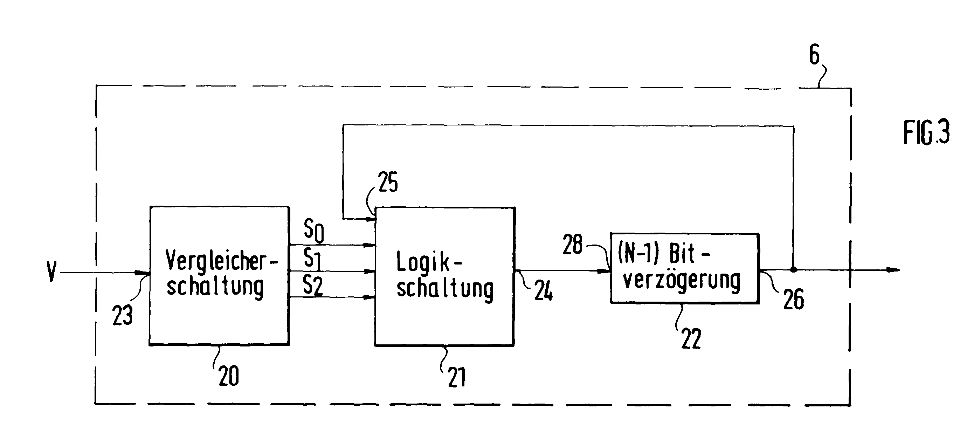

In der (N-1) Bit-Verzögerungsschaltung werden die einzelnen Bits mit jeder Taktperiode um eine Stufe weitergeschoben. In Fig. 3 ist ein Blockdiagramm eines zweiten Ausführungsbeispiels der empfangsseitigen Schaltung 6 gezeigt. Bezeichnungen und Bezugszeichen sind identisch mit den in Fig. 2 genannten.

Abweichend von Fig. 2 ist das zurückgewonnene Digitalsignal jetzt am Ausgang 26 der (N-1) Bit-Verzögerungsschaltung 22 verfügbar. Das Digitalsignal ist dadurch um N Bits verzögert was aber für die weitere Signalverarbeitung keine Rolle spielt. Unverändert bleibt, daß der Wert am Ausgang 26 zum Eingang 25 rückgekoppelt wird und daß zwischen diesem Eingang und Ausgang eine Verzögerung um N Bits stattfindet.

Prinzipiell steht das Digitalsignal nach jeder Stufe der (N-1) Bit-Verzögerungsschaltung entsprechend verzögert zur Verfügung.

In Fig. 4 ist ein detaillierteres Schaltbild der empfangsseitigen Schaltung 6 für einen Laufzeitunterschied $\Delta\tau$, der der Dauer von drei Bits entspricht gezeigt; somit ist N = 3. Der erste Teil der Schaltung, der der Vergleicherschaltung 20 entspricht, besteht aus zwei D-Flipflops 31, 32 und einem UND-Gatter 33. Das elektrische Ausgangssignal V des Optisch-Elektrisch-Wandlers 5 aus Fig. 1 gelangt parallel auf die beiden D-Flipflops 31 und 32. Beide D-Flipflops werden durch einen Takt C1 getaktet. Der Q-Ausgang des D-Flipflops 31 stellt das Signal $S_1$ dar und der $\overline{Q}$-Ausgang des D-Flipflops 32 stellt das Signal $S_0$ dar. Der $\overline{Q}$-Ausgang des D-Flipflops 31 und der Q-Ausgang des D-Flipflops 32 sind mit dem UND-Gatter 33 verbunden; dessen Ausgang stellt das Signal $S_2$ dar.

Der Teil der Schaltung, der der Logikschaltung 21 entspricht, besteht aus zwei UND-Gattern 34 und 35, zwei ODER-Gattern 36 und 37 und dem bereits erwähnten RS-Flipflop 38. Einem ersten Eingang des ODER-Gatters 36 wird das Binärsignal $S_1$ zugeführt und ein zweiter Eingang des ODER-Gatters 36 ist mit einem Ausgang des UND-Gatters 34 verbunden. Einem ersten Eingang des ODER-Gatters 37 wird das Binärsignal $S_0$ zugeführt und ein zweiter Eingang des ODER-Gatters 37 ist mit einem Ausgang des UND-Gatters 35 verbunden. Das Binärsignal $S_2$ wird einem ersten Eingang des UND-Gatters 34 und einem ersten Eingang des UND-Gatters 35 zugeführt. Ein zweiter Eingang des UND-Gatters 34 ist mit einem Q-Ausgang eines D-Flipflops 49 (gehört zur (N-1) Bit-Verzögerungsschaltung) verbunden und ein zweiter Eingang des UND-Gatters 35 ist mit einem $\overline{Q}$-Ausgang des D-Flipflops 49 verbunden.

Ein Ausgang des ODER-Gatters 36 ist mit einem Eingang S und ein Ausgang des ODER-Gatters 37 mit einem Eingang R des RS-Flipflops 38 verbunden. Ein Ausgang des RS-Flipflops 38 ist mit der (N-1) Bit-Verzögerungsschaltung verbunden.

Der Teil der Schaltung, der der (N-1) Bit-Verzögerungsschaltung 22 entspricht, besteht aus zwei D-Flipflops 39 und 49. Ein Q-Ausgang der Logikschaltung 21 ist mit einem Eingang des D-Flipflops 39 verbunden. Ein Q-Ausgang des D-Flipflops 39 ist mit einem Eingang des D-Flipflops 49 verbunden. Am Q-Ausgang des D-Flipflops 49 steht das Digitalsignal zur Verfügung. Die Flipflops 39, 49 werden durch den Takt $C_L$ getaktet. In diesem Ausführungsbeispiel bewirkt die Verzögerungsschaltung 22 eine Verzögerung von zwei Bits, d.h. N-1 = 2.

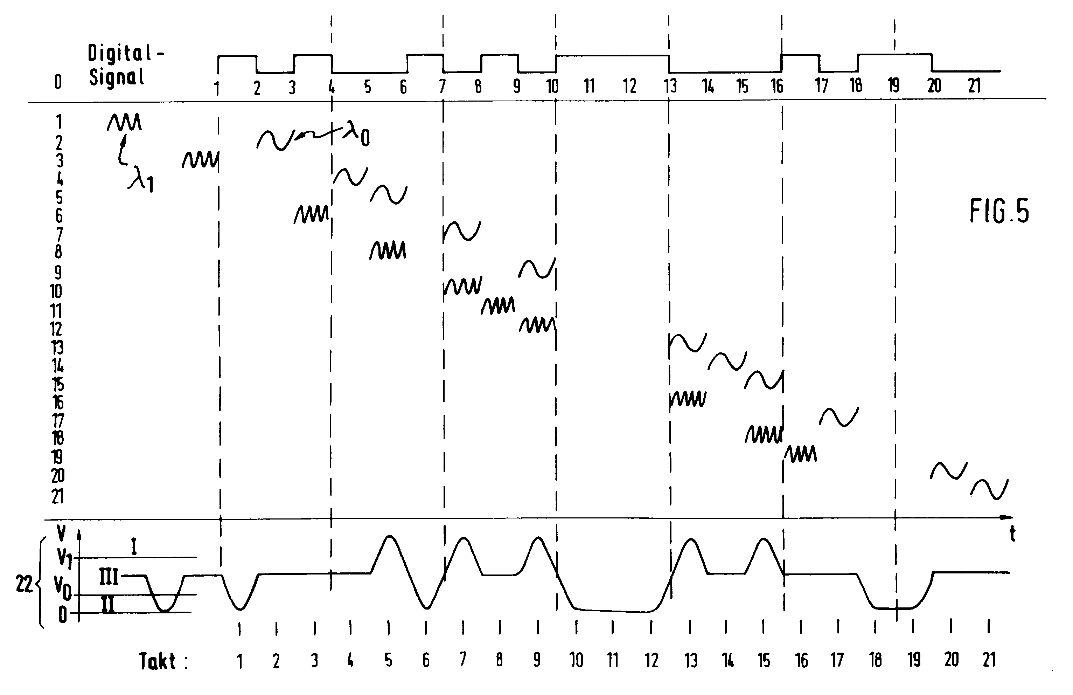

Im folgenden soll mit den Figuren 4, 5 und 6 die Wirkungsweise der empfangsseitigen Schaltung erklärt werden. Fig. 5 zeigt in der Zeile 0 beispielsweise ein zu sendendes Digitalsignal. Die Länge des Lichtwellenleiters ist hier so gewählt, daß der Laufzeitunterschied $\Delta\tau$ der Dauer von drei Bits entspricht. In den Zeilen 1 - 21 ist der zeitliche Verlauf der Wellenzüge gezeigt. Ein Wellenzug mit der Wellenlänge $\lambda_1$ entspricht einer gesendeten logischen "1", und ein Wellenzug mit der Wellenlänge $\lambda_0$ entspricht einer gesendeten logischen "0". Zeile 1 zeigt einen Wellenzug der Wellenlänge $\lambda_1$, der hier um drei Bits, bezogen auf den Wellenzug der Wellenlänge $\lambda_0$, voreilt. Zum Zeitpunkt des fünften Taktes z.B. überlagert sich der Wellenzug desfünften Bits, Wellenlänge $\lambda_0$, mit dem Wellenzug des achten Bits. Das elektrische Ausgangssignal V wird dadurch erhöht. In Zeile 22 wird hier z.B. zum fünften Takt der Schwellenwert $V_1$ überschritten. Das sich am Ende der Lichtwellenleiterstrecke nach dem Optisch-Elektrisch Wandler ergebende elektrische Ausgangssignal V ist in Zeile 22 gezeigt. Die drei Wertebereiche sind angedeutet: Der Wertebereich I liegt oberhalb des oberen Schwellenwertes $V_1$, der Wertebereich II unterhalb des unteren Schwellenwertes $V_0$ und der Wertebereich III zwischen dem unterem und dem oberen Schwellenwert.

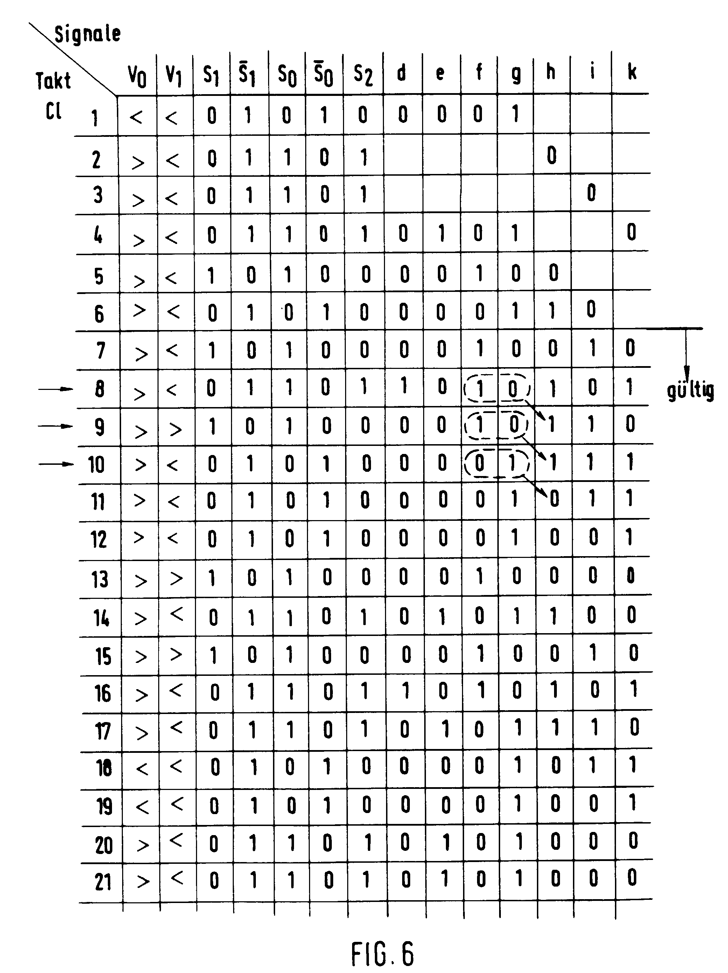

Ausgehend von Zeile 22 in Fig. 5 und der Schaltung in Fig. 4 kann die Tabelle in Fig. 6 erstellt werden. Mit Hilfe der in Fig. 4 eingezeichneten Signale $S_0$, $S_1$, $S_2$, c, d,...i, k ist die Zustandstabelle selbsterklärend, beispielhaft soll jedoch das Zustandekommen der Signale zu drei Taktzeitpunkten erklärt werden. Der Takt des Digitalsignals wird hierbei mit Hilfe der Messung von Augendiagrammen zurückgewonnen. Es ist dabei darauf zu achten, daß die Minima und Maxima des elektrischen Ausgangssignals V vom Takt erfaßt werden.

Beim achten Takt liegt der Abtastwert zwischen den Schwellenwerten im dritten Bereich; wegen $S_2$ = "1" wird hier d = "1" und e = "0"; f = "1" setzt beim nächsten Takt das Signal h = "1"; das ist der Zustand des Ausgangs k zum vorherigen Takt. Beim neunten Takt liegt der Abtastwert oberhalb der beiden Schwellenwerte (V > $V_0$ und V < $V_1$), wegen $S_2$ = "0" ist auch d = "0" und e = "0"; f = "1" setzt beim nächsten Takt das Signal h = "1". Beim zehnten Takt liegt der Abtastwert unterhalb der Schwellwerte, d.h. V < $V_0$ und V < $V_1$, wegen $S_2$ = "0" ist auch d = "0" und e = "0"; g = "1" setzt beim nächsten Takt das Signal h = "0". In Fig. 6 sind diese Taktzeitpunkte in der Tabelle angedeutet.

Man erkennt, daß das Ausgangssignal der Schaltung ab dem siebten Takt mit dem Digitalsignal übereinstimmt. Die Information der ersten sechs Bits geht verloren. Dies läßt sich jedoch verhindern, wenn die ersten sechs Bits z.B. eine beliebige Testfolge darstellen und die Information erst ab dem siebten Bit beginnt.

Das Digitalsignal steht an jedem Q-Ausgang der Flipflops 38 und 39 mit entsprechender Verzögerung zur Verfügung, z.B. am Q-Ausgang des RS-Flipflops 38. In diesem Fall ist das Digitalsignal bereits nach dem fünften Takt gültig.

In den Ausführungsbeispielen wurde gezeigt, daß für N = 3 das Digitalsignal zurückgewonnen werden kann. Abschließend soll im folgenden gezeigt werden, daß das Digitalsignal auch dann noch zurückgewonnen werden kann, wenn der Zeitunterschied $\Delta\tau$ der Dauer von beliebig vielen (N) Bits entspricht. Dieser Zeitunterschied $\Delta\tau$ kann auch einem nichtganzzahligen Vielfachen der Dauer eines Bits entsprechen. Für die (N-1) Bit-Verzögerungsschaltung ist in diesem Fall N ganzzahlig aufzurunden.

Es soll ein Digitalsignal mit einer Bitfolge $S_K$ übertragen werden, $S_K \in \{0, 1\}$.

Nach dem Optisch-Elektrisch Wandler entsteht daraus ein elektrisches Ausgangssignal $V_K$ mit drei möglichen Zuständen $V_K \in \{H, U, L\}$.

Es gilt:

$$V_K = \begin{cases} \text{H falls } S_K = 0 \text{ und } S_{K+N} = 1 \\ \\ \text{U falls } S_K = 0 \text{ und } S_{K+N} = 0 \qquad (1) \\ \\ \text{L falls } S_K = 1 \text{ und } S_{K+N} = 0 \end{cases}$$

Die erste Stufe der empfangsseitigen Schaltung 6 erzeugt ein Ausgangssignal $D_K \in \{0, 1\}$, es gilt:

$$D_K = \begin{cases} 1 \qquad \text{falls } V_K = H \\ \\ D_{K-N} \text{ falls } V_K = U \qquad\qquad (2) \\ \\ 0 \qquad \text{falls } V_K = L \end{cases}$$

Es gilt zu zeigen, daß

$$S_K = D_{K-N} \qquad\qquad (3)$$

ist, d.h. die empfangsseitige Schaltung gewinnt das Digitalsignal zurück.

Wird Gleichung (1) in Gleichung (2) eingesetzt, ergibt sich:

$$D_K = \begin{cases} 1 \text{ falls } S_K = 0 \text{ und } S_{K+N} = 1 \\ \\ D_N \text{ falls } S_K = S_{K+N} \\ \\ 0 \text{ falls } S_K = 1 \text{ und } S_{K+N} = 0 \end{cases}$$

und für K→(K-N)

$$D_{K-N} = \begin{cases} 1 & \text{falls } S_{K-N} = 0 \text{ und } S_K = 1 \quad (i) \\ D_{K-2N} & \text{falls } S_{K-N} = S_K \quad (ii) \\ 0 & \text{falls } S_{K-N} = 1 \text{ und } S_K = 0 \quad (iii) \end{cases}$$

Fall (i): aus $D_{K-N} = 1$ und $S_K = 1$ folgt
$D_{k-N} = S_K$,

Fall (ii): aus $D_{K-N} = 0$ und $S_K = 0$ folgt
$D_{K-N} = S_K$,

Fall (iii): a) Sei $S_{K-N} = S_K = 1$.
Für $D_{K-2N} = 1$ folgt
$D_{K-2N} = 1 = S_K$,
d.h. Gleichung (3) gilt falls $D_{K-2N} = 1$ gesetzt war.

Das ist aber der Fall, falls vorher einmal ein Signalwechsel von 0 nach 1 aufgetreten ist, vgl. Fall (i):

$$D_{K-mN} = 1 \text{ falls } S_{K-mN} = 0 \text{ und } S_{K-(m-1)N} = 1.$$

Fall (iii): b) Sei $S_{K-N} = S_K = 0$ entsprechend Fall a): vorher muß einmal ein Signalwechsel von 1 nach 0 aufgetreten sein.

Gleichung (3) gilt also mit folgender Einschränkung: Signalanteile mit der Periode N können nicht dekodiert werden, d.h.
falls $S_K = S_{K+mN}$
$m \in \{..-2, -1, 0, 1, 2, ...\}$ gilt, ist $D_{K+mN}$
unbestimmt.
Ein einziger Signalwechsel $S_K \neq S_{K+N}$ genügt, um $D_K$ in den richtigen Zustand zu setzen, der dann beibehalten wird.

**Patentansprüche**

1. Empfangsseitige Schaltung (6) für ein System zur optischen Übertragung eines Digitalsignals über einen bei der Betriebswellenlänge dispersionsbehafteten Lichtwellenleiter (3), bei dem ein optisches Ausgangssignal eines optischen Senders (2), durch das Digitalsignal frequenzmoduliert, über den Lichtwellenleiter optisch übertragen wird, deren Eingangssignal ein von einem Optisch-Elektrisch Wandler (5) kommendes elektrisches Ausgangssignal (V) ist, das drei Wertebereiche durchläuft, wobei ein erster Wertebereich oberhalb eines oberen Schwellenwertes ($V_1$), ein zweiter Wertebereich unterhalb eines unteren Schwellenwertes ($V_0$) und ein dritter Wertebereich zwischen dem oberen und dem unteren Schwellenwert liegt, und die aus Abtastwerten des elektrischen Ausgangssignals (V) das Digitalsignal zurückgewinnt,
**dadurch gekennzeichnet,**
daß die Schaltung (6) eine Vergleicherschaltung (20), eine damit verbundene Logikschaltung (21) und eine mit der Logikschaltung (21) verbundene (N-1) Bit-Verzögerungsschaltung (22) enthält;wobei der Ausgang der Verzögerungsschaltung (22) zu einem Eingang der Logikschaltung zurückgekoppelt ist, und daß die Vergleicherschaltung (20) ein erstes Binärsignal ($S_1$) abgibt, wenn der an ihrem Eingang anliegende Abtastwert im ersten Wertebereich liegt, daß sie ein zweites Binärsignal ($S_0$) abgibt, wenn der Abtastwert im zweiten Wertebereich liegt, daß sie ein drittes Binärsignal ($S_2$) abgibt, wenn der Abtastwert im dritten Wertebereich und daß dieses Signal den Zustand einnimmt, der N Bits vorher an demselben Ausgang aufgetreten ist, wobei N der aufgerundete ganzzahlige Wert von

$$\frac{\Delta\lambda \cdot D \cdot L}{T}$$

ist, D die Dispersion und L die Länge des Lichtwellenleiters, T die Dauer eines Bits und $\Delta\lambda$ die der Frequenzmodulation zugrundeliegende Wellenlängendifferenz ist.

2. Empfangsseitige Schaltung nach Anspruch 1, dadurch gekennzeichnet, daß die Logikschaltung (21) an ihrem Ausgang (24) im ersten Fall einen bestimmten logischen Wert, im zweiten Fall den invertierten logischen Wert und im dritten Fall den N Bits vorher am Ausgang (26) der (N-1) Bit-Verzögerungsschaltung (22) aufgetretenen logischen Wert abgibt, wobei sie eine Verzögerung bewirkt, die der Dauer eines Bits entspricht.

3. System zur optischen Übertragung eines Digitalsignals über einen bei der Betriebswellenlänge dispersionsbehafteten Lichtwellenleiter (3), mit einem optischen Sender (2) auf der Sendeseite, dessen optisches Ausgangssignal durch das Digitalsignal frequenzmoduliert ist, und mit einem Optisch-Elektrisch Wandler (5) auf der Empfangsseite, der sein drei Wertebereiche durchlaufendes optisches Eingangssignal in ein dessen Intensitätsverlauf entsprechendes drei Wertebereiche durchlaufendes elektrisches Ausgangssignal (V) umwandelt, wobei ein erster Wertebereich oberhalb eines oberen Schwellenwertes ($V_1$), ein zweiter Wertebereich unterhalb eines unteren Schwellenwertes ($V_0$) und ein dritter Wertebereich zwischen dem oberen und dem unteren Schwellenwert liegt, und dem eine Schaltung (6) nachgeschaltet ist, die aus Abtastwerten des elektrischen Ausgangssignals (V) des Optisch-Elektrisch Wandlers (5) das Digitalsignal zurückgewinnt,
**dadurch gekennzeichnet,**
daß die Schaltung (6) eine Vergleicherschaltung (20), eine damit verbundene Logikschaltung (21) und eine mit der Logikschaltung (21) verbundene (N-1) Bit-Verzögerungsschaltung (22) enthält, wobei der Ausgang der Verzögerungsschaltung (22) zu einem Eingang der Logikschaltung zurückgekoppelt ist, und daß die Vergleicherschaltung (20) ein erstes Binärsignal ($S_1$) abgibt, wenn der an ihrem Eingang anliegende Abtastwert im ersten Bereich liegt, daß sie ein zweites Binärsignal ($S_0$) abgibt, wenn der Abtastwert im zweiten Bereich liegt, daß sie ein drittes Binärsignal ($S_2$) abgibt, wenn der Abtastwert im dritten Bereich und daß dieses Signal den Zustand einnimmt, der N Bits vorher an demselben Ausgang aufgetreten ist, wobei N der aufgerundete ganzzahlige Wert von

$$\frac{\Delta\lambda \cdot D \cdot L}{T}$$

ist, D die Dispersion und L die Länge des Lichtwellenleiters, T die Dauer eines Bits und $\Delta\lambda$ die der Frequenzmodulation zugrundeliegende Wellenlängendifferenz ist.

4. System nach Anspruch 3, dadurch gekennzeichnet, daß die Logikschaltung (21) an ihrem Ausgang (24) im ersten Fall einen bestimmten logischen Wert, im zweiten Fall den invertierten logischen Wert und im dritten Fall den N Bits vorher am Ausgang (26) der (N-1) Bit-Verzögerungsschaltung (22) aufgetretenen logischen Wert abgibt, wobei sie eine Verzögerung bewirkt, die der Dauer eines Bits entspricht.

5. Empfangsseitige Schaltung oder System nach Anspruch 2 bzw. 4, dadurch gekennzeichnet,
daß die (N-1) Bit-Verzögerungsschaltung (22) in einer vom Ausgang (24) der Logikschaltung (21) zu einem von deren Eingängen führenden Rückkopplungsschleife liegt.

6. Empfangsseitige Schaltung oder System nach Anspruch 2 bzw. 4, dadurch gekennzeichnet,
daß die (N-1) Bit-Verzögerungsschaltung (22) wenigstens teilweise in einem der Logikschaltung (21) nachfolgenden Signalweg liegt und ihr Ausgang (26) zu einem Eingang (25) der Logikschaltung (21) rückgekoppelt ist.

## Claims

1. A receive-side circuit (6) for a system for optically transmitting a digital signal over an optical fiber (3) which is dispersive at the operating wavelength, said system comprising an optical transmitter (2) whose optical output signal, which is frequency-modulated by the digital signal, is optically transmitted over the optical fiber, the input to said receive-side circuit (6) being an electric output signal (V) from an optical-to-electrical transducer (5) which passes through three ranges of values, a first of said ranges lying above an upper threshold value ($V_1$), a second below a lower threshold values ($V_0$), and a third between the upper and lower threshold values, said receive-side circuit (6) recovering the digital signal from sample values of the electric output signal (V),

**characterized in** that the circuit (6) comprises a comparator circuit (20), a logic circuit (21) connected to the comparator circuit (20), and an (N-1)-bit delay circuit (22) connected to the logic circuit (21), with the output of the delay circuit (22) coupled to an input of the logic circuit, and that the comparator circuit (20) provides a first binary signal ($S_1$) when the sample value at its input lies in the first range, that it provides a second binary signal ($S_0$) when the sample value lies in the second range, that it provides a third binary signal ($S_2$) when the sample value lies in the third range, and that this signal assumes the state which occurred at the same output N bits earlier, where N is the rounded-up integral value of

$$\frac{\Delta\lambda \bullet D \bullet L}{T} \; T$$

where D is the dispersion of the optical fiber, L is the length of the optical fiber, T is the duration of one bit, and $\Delta\lambda$ is the wavelength difference underlying the frequency modulation.

2.  A receive-side circuit as claimed in claim 1, characterized in that the logic circuit (21) delivers at its output (24) in the first case a given logic values, in the second case the inverted logic value, and in the third case the logic value which occurred at the output (26) of the (N-1)-bit delay circuit N bits earlier, the logic circuit (21) introducing a delay equal to the duration of one bit.

3.  A system for optically transmitting a digital signal over an optical fiber (3) which is dispersive at the operating wavelength, said system comprising an optical transmitter (2) on the transmit side whose optical output signal is frequency-modulated by the digital signal, an optical-to-electrical transducer (5) on the receive side which converts its optical input signal, which passes through three ranges of values, into an electric output signal (V) which corresponds to the intensity variation of the optical input signal and passes through three ranges of values, a first of said ranges of values lying above an upper threshold value ($V_1$), a second below a lower threshold value ($V_0$), and a third between the upper and lower threshold values, and a circuit (6) following the optical-to-electrical transducer (5) for recovering the digital signal from sample values of the electric output signal (V) of the optical-to-electrical transducer (5),
    **characterized in** that the circuit (6) comprises a comparator circuit (20), a logic circuit (21) connected to the comparator circuit (20), and an (N-1)-bit delay circuit (22) connected to the logic circuit (21), with the output of the delay circuit (22) coupled to an input of the logic circuit, and that the comparator circuit (20) provides a first binary signal ($S_1$) when the sample value at its input lies in the first range, that it provides a second binary signal ($S_0$) when the sample value lies in the second range, that it provides a third binary signal ($S_2$) when the sample value lies in the third range, and that this signal assumes the state which occurred at the same output N bits earlier, where N is the rounded-up integral value of

$$\frac{\Delta\lambda \bullet D \bullet L}{T}$$

where D is the dispersion of the optical fiber, L is the length of the optical fiber, T is the duration of one bit, and $\Delta\lambda$ is the wavelength difference underlying the frequency modulation.

4.  A system as claimed in claim 3,
    characterized in that the logic circuit (21) delivers at its output (24) in the first case a given logic value, in the second case the inverted logic value, and in the third case the logic value which occurred at the output (26) of the (N-1)-bit delay circuit (22) N bits earlier, the logic circuit (21) introducing a delay equal to the duration of one bit.

5.  A receive-side circuit or a system as claimed in claim 2 or 4, respectively,
    characterized in
    that the (N-1)-bit delay circuit (22) is contained in a feedback loop from the output (24) to one of the inputs of the logic circuit (21).

6.  A receive-side circuit or a system as claimed in claim 2 or 4, respectively,
    characterized in
    that the (N-1)-bit delay circuit (22) is contained, at least in part, in a signal path following the logic circuit (21), and that its output (26) is coupled to one (25) of the inputs of the logic circuit (21).

**Revendications**

1. Récepteur (6) pour un système pour la transmission optique d'un signal numérique sur un guide d'ondes optique (3) dispersif sur la longueur d'onde de service, dans lequel un signal de sortie optique d'un émetteur optique (2), modulé en fréquence par le signal numérique, est transmis de façon optique sur le guide d'ondes optique, dont le signal d'entrée est un signal de sortie électrique (V) provenant d'un convertisseur optique/ électrique (5), signal qui traverse trois plages de valeurs, la première plage de valeurs se trouvant au-dessus d'une valeur seuil supérieure ($V_1$), une deuxième plage de valeurs se trouvant au-dessous d'une valeur seuil inférieure ($V_0$) et une troisième plage de valeurs se trouvant entre les valeurs seuil supérieure et inférieure, et qui récupère le signal numérique à partir de valeurs d'échantillonnage du signal de sortie électrique (V), caractérisé en ce que le circuit (6) contient un circuit comparateur (20), un circuit logique (21) connecté à celui-ci et un circuit de temporisation de (N-1) binaires connecté au circuit logique (21) ; la sortie du circuit de temporisation (22) étant réinjectée dans une entrée du circuit logique, et en ce que le circuit comparateur (20) produit un premier signal binaire ($S_1$) quand la valeur d'échantillonnage appliquée à son entrée se trouve dans la première plage de valeurs, en ce qu'il produit un deuxième signal binaire ($S_0$) quand la valeur d'échantillonnage se trouve dans la deuxième plage de valeurs, en ce qu'il produit un troisième signal binaire ($S_2$) quand la valeur d'échantillonnage se trouve dans la troisième plage de valeurs et que ce signal adopte l'état qui est apparu N binaires plus tôt à la même sortie, N étant une valeur entière arrondie par excès de

$$\frac{\Delta\lambda \cdot D \cdot L}{T},$$

D étant la dispersion et L la longueur du guide d'ondes optique, T la durée d'un binaire et $\Delta\lambda$ la différence de longueur d'ondes à la base de la modulation de fréquence.

2. Récepteur selon la revendication 1, caractérisé en ce que le circuit logique (21) produit à sa sortie (24) dans le premier cas une valeur logique déterminée, dans le deuxième cas la valeur logique inverse et dans le troisième cas la valeur logique qui était apparue N binaires plus tôt à la sortie (26) du circuit de temporisation de (N-1) binaires (22), provoquant une temporisation qui correspond à la durée d'un binaire.

3. Système pour la transmission optique d'un signal numérique sur un guide d'ondes optique (3) dispersif sur la longueur d'onde de service, avec un émetteur optique (2) du côté émetteur, dont le signal de sortie optique est modulé en fréquence par le signal numérique, et avec un convertisseur optique/ électrique (5) du côté réception, qui transforme son signal d'entrée optique traversant trois plages de valeurs en un signal de sortie électrique (V) correspondant à la variation d'intensité de celui-ci et traversant trois plages de valeurs, une première plage de valeurs se trouvant au-dessus d'une valeur seuil supérieure ($V_1$), une deuxième plage de valeurs se trouvant au-dessous d'une valeur seuil inférieure ($V_0$) et une troisième plage de valeurs se trouvant entre les valeurs seuil supérieure et inférieure, et celui-ci étant connecté en série avec un circuit (6) qui récupère le signal numérique à partir de valeurs d'échantillonnage du signal de sortie électrique (V) du convertisseur optique/ électrique, caractérisé en ce que le circuit (6) contient un circuit comparateur (20), un circuit logique (21) connecté à celui-ci, et un circuit de temporisation de (N-1) binaires (22) connecté au circuit logique (21), la sortie du circuit de temporisation (22) étant réinjectée dans une entrée du circuit logique, et en ce que le circuit logique (20) produit un premier signal binaire ($S_1$) quand la valeur d'échantillonnage appliquée à son entrée se trouve dans la première plage, en ce qu'il produit un deuxième signal binaire ($S_0$) quand la valeur d'échantillonnage se trouve dans la deuxième plage de valeurs, en ce qu'il produit un troisième signal binaire ($S_2$) quand la valeur d'échantillonnage se trouve dans la troisième plage et en ce que ce signal adopte l'état qui est apparu N binaires plus tôt à la même sortie, N étant la valeur entière arrondie par excès de

$$\frac{\Delta\lambda \cdot D \cdot L}{T},$$

D étant la dispersion et L la longueur du guide d'ondes optique, T la durée d'un binaire et $\Delta\lambda$ la différence de longueur d'onde à la base de la modulation de fréquence.

4. Système selon la revendication 3, caractérisé en ce que le circuit logique (21) produit à sa sortie (24) dans le premier cas une valeur logique déterminée, dans le deuxième cas la valeur logique inverse et dans le troisième cas la valeur logique apparue N binaires plus tôt à la sortie (26) du circuit de temporisation de (N-1) binaires (22), provoquant une temporisation correspondant à la durée d'un binaire.

5. Circuit ou système récepteur selon la revendication 2 ou 4, caractérisé en ce que le circuit de temporisation de (N-1) binaires (22) se trouve dans une boucle de réinjection allant de la sortie (24) du circuit logique (21) à l'une de ses entrées.

6. Circuit ou système récepteur selon la revendication 2 ou 4, caractérisé en ce que le circuit de temporisation de (N-1) binaires (22) se trouve au moins partiellement sur une voie de signal suivant le circuit logique (21) et que sa sortie (26) est réinjectée dans une entrée (25) du circuit logique (21).

EP 0 595 087 B1

0 1 0 2 0 1 0 3

E/O $\lambda_0$ $\lambda_1$ $\lambda_0$

4 0 1 0

O/E V 5 6

**FIG.1**

26 (N-1)Bit-Ver-zögerung 28

22

25

V

23 Vergleicher-schaltung $S_0$ $S_1$ $S_2$ Logik-schaltung 24 6

20 21

**FIG.2**

FIG.3

EP 0 595 087 B1

FIG.4

EP 0 595 087 B1

FIG.5

| Signale Takt Cl | V$_0$ | V$_1$ | S$_1$ | $\bar{S}_1$ | S$_0$ | $\bar{S}_0$ | S$_2$ | d | e | f | g | h | i | k |
|---|---|---|---|---|---|---|---|---|---|---|---|---|---|---|
| 1 | < | < | 0 | 1 | 0 | 1 | 0 | 0 | 0 | 0 | 1 | | | |
| 2 | > | < | 0 | 1 | 1 | 0 | 1 | | | | | 0 | | |
| 3 | > | < | 0 | 1 | 1 | 0 | 1 | | | | | | 0 | |
| 4 | > | < | 0 | 1 | 1 | 0 | 1 | 0 | 1 | 0 | 1 | | | 0 |
| 5 | > | < | 1 | 0 | 1 | 0 | 0 | 0 | 0 | 1 | 0 | 0 | | |
| 6 | > | < | 0 | 1 | 0 | 1 | 0 | 0 | 0 | 0 | 1 | 1 | 0 | |
| 7 | > | < | 1 | 0 | 1 | 0 | 0 | 0 | 0 | 1 | 0 | 0 | 1 | 0 |
| 8 | > | < | 0 | 1 | 1 | 0 | 1 | 1 | 0 | 1 | 0 | 1 | 0 | 1 |
| 9 | > | > | 1 | 0 | 1 | 0 | 0 | 0 | 0 | 1 | 0 | 1 | 1 | 0 |
| 10 | > | < | 0 | 1 | 0 | 1 | 0 | 0 | 0 | 0 | 1 | 1 | 1 | 1 |
| 11 | > | < | 0 | 1 | 0 | 1 | 0 | 0 | 0 | 0 | 1 | 0 | 1 | 1 |
| 12 | > | < | 0 | 1 | 0 | 1 | 0 | 0 | 0 | 0 | 1 | 0 | 0 | 1 |
| 13 | > | > | 1 | 0 | 1 | 0 | 0 | 0 | 0 | 1 | 0 | 0 | 0 | 0 |
| 14 | > | < | 0 | 1 | 1 | 0 | 1 | 0 | 1 | 0 | 1 | 1 | 0 | 0 |
| 15 | > | > | 1 | 0 | 1 | 0 | 0 | 0 | 0 | 1 | 0 | 0 | 1 | 0 |
| 16 | > | < | 0 | 1 | 1 | 0 | 1 | 1 | 0 | 1 | 0 | 1 | 0 | 1 |
| 17 | > | < | 0 | 1 | 1 | 0 | 1 | 0 | 1 | 0 | 1 | 1 | 1 | 0 |
| 18 | < | < | 0 | 1 | 0 | 1 | 0 | 0 | 0 | 0 | 1 | 0 | 1 | 1 |
| 19 | < | < | 0 | 1 | 0 | 1 | 0 | 0 | 0 | 0 | 1 | 0 | 0 | 1 |
| 20 | > | < | 0 | 1 | 1 | 0 | 1 | 0 | 1 | 0 | 1 | 0 | 0 | 0 |
| 21 | > | < | 0 | 1 | 1 | 0 | 1 | 0 | 1 | 0 | 1 | 0 | 0 | 0 |

gültig

FIG. 6

15